# EUROPÄISCHE PATENTSCHRIFT

(11) **EP 3 595 979 B1**
(45) Veröffentlichungstag und Bekanntmachung des Hinweises auf die Patenterteilung: **05.04.2023**
(21) Anmeldenummer: 18703764.3
(22) Anmeldetag: 06.02.2018
(51) Int. Cl.: B65C 9/06, B67C 3/24

(54) **BEHÄLTERBEHANDLUNGSVORRICHTUNG MIT ZENTRIERELEMENTEN ZUM EINSPANNEN DER BEHÄLTER**
CONTAINER HANDLING DEVICE WITH CENTRING ELEMENTS FOR CLAMPING THE CONTAINERS
DISPOSITIF DE MANIPULATION DE RÉCIPIENT AVEC ÉLÉMENTS DE CENTRAGE POUR LE SERRAGE DU RÉCIPIENT

(30) Priorität: 15.03.2017 DE 102017105482
(43) Veröffentlichungstag der Anmeldung: 22.01.2020
(73) Patentinhaber: KHS GmbH, 44143 Dortmund (DE)
(72) Erfinder: ULLRICH, Andreas, 42653 Solingen (DE); STOCK, Klaus-Friedrich, 44289 Dortmund (DE)
(86) Internationale Anmeldenummer: PCT/EP2018/052846
(87) Internationale Veröffentlichungsnummer: WO 2018/166714

(56) Entgegenhaltungen:
- EP-A1- 1 072 511
- DE-A1- 3 112 341
- DE-B- 1 160 749
- DE-U1- 9 113 832
- JP-A- 2012 103 114

## Beschreibung

Die Erfindung bezieht sich auf eine Vorrichtung zum Behandeln von Behältern sowie ein Verfahren zum Übergeben und Fixieren von Behältern in einer solchen Vorrichtung.

Behälterbehandlungsvorrichtungen an sich sind bekannt. Insbesondere ist es bekannt, Behälter mittels rotierender Fördereinrichtungen auf einem mehrfach umgelenkten Transportweg zu transportieren.

Die Druckschrift JP 2012 103144 A offenbart eine Leckinspektionsvorrichtung für PET-Behälter. Die Merkmale des Oberbegriffs der Ansprüche 1 und 16 sind aus dieser Druckschrift bekannt.

Die Druckschrift DE 31 12 341 A1 offenbart eine Flaschenfüllmaschine.

Ebenfalls ist es bekannt, Behälter im Mündungsbereich hängend zu halten. So sind zum Beispiel Transfersterne bekannt, die zangenartige Halteeinrichtungen aufweisen, die die Behälter im Bereich der Behältermündung (insbesondere in einem Gewindebereich an der Behältermündung) umfangsseitig zumindest teilweise umschließen. Des Weiteren finden Behälteraufnahmen Verwendung, bei denen die Behälter im Mündungsbereich eingespannt gehalten werden. Derartige Behälteraufnahmen weisen ein Zentrierelement und ein mit dem Zentrierelement zusammenwirkendes Gegenlager auf, wobei die Einspannung des Behälters durch eine Relativbewegung zwischen dem Zentrierelement und dem Gegenlager erreicht wird.

Zur Übergabe eines Behälters von einer Fördereinrichtung zu einer in Transportrichtung folgenden, weiteren Fördereinrichtung ist es bekannt, dass diese Fördereinrichtungen kämmend ineinandergreifen. In anderen Worten wird dabei ein Behälter von einer zufördernden Fördereinrichtung (z.B. ein Transferstern) durch dessen Halteeinrichtung einer Behälteraufnahme zugeführt, die an einer abfördernden Fördereinrichtung (z.B. einem Transportstern, an dem die Behälterbehandlung erfolgt) vorgesehen ist. Um den Behälter von der klemmenden Halterung der Halteeinrichtung der zufördernden Fördereinrichtung lösen zu können, ist es notwendig, den Behälter an der Behälteraufnahme zu fixieren, beispielsweise durch Einspannen zwischen dem Zentrierelement und dem Gegenlager.

Nachteilig hierbei ist, dass es im Falle von Leerstellen im Behälterstrom, d.h. in Fällen, in denen kein Behälter von der zufördernden Fördereinrichtung bereitgestellt wird, zu einer unerwünschten Berührung bzw. Kollision zwischen der Halteeinrichtung und der Behälteraufnahme kommen kann.

Ausgehend hiervon ist es Aufgabe der Erfindung, eine Behälterbehandlungsvorrichtung anzugeben, die derartige Berührungen bzw. Kollisionen zwischen Halteeinrichtung und Behälteraufnahme vermeidet und damit hinsichtlich Verschleiß und Betriebssicherheit verbessert ist.

Die Aufgabe wird durch eine Vorrichtung gemäß den Merkmalen des unabhängigen Patentanspruchs 1 gelöst. Ein Verfahren zum Übergeben und Fixieren von Behältern ist Gegenstand des nebengeordneten Patentanspruchs 15.

Gemäß einem ersten Aspekt bezieht sich die Erfindung auf eine Behälterbehandlungsvorrichtung umfassend zumindest eine erste rotierende Fördereinrichtung mit mehreren umfangsseitig verteilt angeordneten Behälteraufnahmen und eine zweite rotierende Fördereinrichtung mit mehreren umfangsseitig verteilt angeordneten Halteeinrichtungen. Die Behälteraufnahmen und die Halteeinrichtungen der Fördereinrichtungen wirken in einem Übergabebereich kämmend miteinander zusammen, um eine Übergabe eines Behälters zwischen den Fördereinrichtungen zu bewirken. Die Behälteraufnahme ist dabei dazu ausgebildet, den Behälter zumindest zeitweise im Mündungsbereich eingespannt zwischen einem Zentrierelement und einem mit dem Zentrierelement zusammenwirkenden Gegenlager zu fixieren. Die Halteeinrichtung ist ferner dazu ausgebildet, den Behälter oberhalb des Bereichs, an dem das Gegenlager angreift, zu fixieren. Das Zentrierelement ist relativ zum Gegenlager bewegbar, um ein Einspannen des Behälters zu bewirken. Zudem ist ein Bewegungsmechanismus für das Zentrierelement vorgesehen, der dazu ausgebildet ist, das Zentrierelement im Übergabebereich durch einen ersten Teilhub gegen die Behältermündung in Anlage zu bringen und nach Verlassen des Übergabebereichs durch einen zweiten Teilhub das Zentrierelement gegenüber der Behältermündung anzupressen, wobei der Anpressdruck des Zentrierelements gegen die Behältermündung nach Verlassen des Übergabebereichs größer ist als im Übergabebereich.

Der wesentliche Vorteil der Vorrichtung besteht darin, dass durch das Einspannen des Behälters in mehreren zeitlich aufeinanderfolgenden Teilhüben Berührungen bzw. Kollisionen zwischen der Halteeinrichtung und dem Zentrierelement wirksam vermieden werden, da in dem Übergabebereich, in dem die Halteeinrichtung und die Behälteraufnahme, die das Einspannen des Behälters bewirkt, kämmend ineinandergreifen, das Zentrierelement mit nur einem Teilhub zugestellt wird. Dieser Teilhub ist vorzugsweise derart gewählt, dass der Behälter ausreichend fixiert wird, um diesen aus der klemmend fixierenden Halteeinrichtung herauslösen zu können.

Der Erfindung liegt die überraschende Erkenntnis zugrunde, dass die Behälter auch dann aus der Halteeinrichtung entnommen werden kann, wenn der Behälter nicht mit dem vollen Anpressdruck eingespannt ist, sondern lediglich mit einem im Vergleich dazu niedrigeren Anpressdruck.

Gemäß einem Ausführungsbeispiel ist der erste Teilhub derart gewählt ist, dass im Falle des Fehlens eines zu übergebenden Behälters beim kämmenden Ineinandergreifen der Halteeinrichtung und der das Einspannen bewirkenden Behälteraufnahme das Zentrierelement oberhalb der Halteeinrichtung beabstandet zu dieser angeordnet ist. In anderen Worten wird das Zentrierelement nur soweit in Richtung des Gegenlagers zugestellt, dass das Zentrierelement bei Fehlen eines Behälters berührungsfrei an der Halteeinrichtung, die im Übergabebereich in den Zwischenraum zwischen Zentrierelement und Gegenlager hineinragt, vorbeibewegt werden kann. Damit können vorbeschriebene Berührungen bzw. Kollisionen vorteilhaft verhindert werden.

Gemäß einem Ausführungsbeispiel ist der Bewegungsmechanismus kurvengesteuert, d.h. es ist eine Steuerkurve vorgesehen, die die mehrstufige Hubbewegung des Zentrierelements bewirkt. Dadurch kann eine mechanisch einfache und kostengünstige Steuerung der Hubbewegung erreicht werden. Alternativ ist es möglich, die Hubbewegung des Zentrierelements durch einzelne Aktoren, Pneumatikzylinder oder beispielsweise Motoren, insbesondere Linearmotoren zu bewirken.

Gemäß einem Ausführungsbeispiel wirkt der Bewegungsmechanismus mit einer mehrstufigen Steuerkurve zusammen, die zumindest ein erstes Kurvenniveau, bei dem das Zentrierelement von der Behältermündung beabstandet ist, ein zweites Kurvenniveau, bei dem das Zentrierelement gegenüber der der Behältermündung angepresst wird und ein Kurvenzwischenniveau aufweist, dessen Höhe zwischen dem ersten und zweiten Kurvenniveau liegt. Durch diese mehrstufige Steuerkurve kann die mehrstufige Hubbewegung des Zentrierelements erreicht werden.

Gemäß einem Ausführungsbeispiel ist das Kurvenzwischenniveau derart an der Steuerkurve vorgesehen, dass das Zentrierelement durch das Kurvenzwischenniveau im Übergabebereich den ersten Teilhub vollzieht bzw. im Übergabebereich mit einem im Vergleich zur Einspannung unmittelbar nach dem Übergabebereich geringen Anpressdruck gegen die Behältermündung angedrückt wird. Dadurch wird der Behälter im Übergabebereich lediglich locker eingespannt, was im Falles des Fehlens eines Behälters im Behälterstrom jedoch dazu führt, dass das Zentrierelement berührungsfrei über der Halteeinrichtung vorbeibewegt werden kann.

Gemäß einem Ausführungsbeispiel ist die Steuerkurve höhenverstellbar ausgebildet. Die Steuerkurve kann dabei insgesamt höhenverstellbar ausgebildet sein, oder es kann lediglich ein Teilbereich der Steuerkurve höhenverstellt werden. Dies ist beispielsweise durch den Austausch eines Kurvensegments bzw. eines Abschnitts der Steuerkurve möglich. Dadurch kann die Vorrichtung an unterschiedliche Behälterformate bzw. an unterschiedliche Höhen der Halteeinrichtung angepasst werden.

Alternativ oder ergänzend kann die Kurve nicht höhenverstellbar sein. Stattdessen erfolgt dann die die Anpassung an unterschiedliche Behältermündungen durch das Zentrierelement selbst, indem dieses in der Einbaulage eine unterschiedliche vertikale Ersteckung aufweist. Bei einer hohen Behältermündung wird ein niedriges, d.h. kurzes Zentrierelement vorgesehen und bei einer niedrigen Behältermündung, muss analogerweise eine Höhenkompensation über ein entsprechend höheres Zentrierelement erfolgen. Das Zentrierelement ist auf einfache Weise austauschbar, insbesondere werkzeuglos austauschbar.

Gemäß einem Ausführungsbeispiel weist die Steuerkurve an mehreren unterschiedlichen Sektoren das Kurvenzwischenniveau auf. Diese Sektoren definieren jeweils einen Übergabebereich. Dieser Übergabebereich kann beispielsweise in Rotationsrichtung der Fördereinrichtung unmittelbar vor oder unmittelbar nach einem Sektor vorgesehen sein, in dem das Zentrierelement maximal vom Gegenlager beabstandet ist.

Gemäß einem Ausführungsbeispiel ist das Kurvenzwischenniveau einem Einlaufbereich der Behälter und/oder einem Auslaufbereich der Behälter zugeordnet. In anderen Worten vollzieht der Bewegungsmechanismus des Zentrierelements nicht nur im Einlaufbereich sondern auch im Auslaufbereich der Behälter den ersten Teilhub, so dass im Falle einer Leerstelle im Behälterstrom auch im Auslaufbereich das Zentrierelement berührungsfrei an der Halteeinrichtung vorbeibewegt werden kann.

Gemäß einem Ausführungsbeispiel bildet das Gegenlager ein Auflager für eine an einem Behälterhals vorgesehene Außenkontur, insbesondere einen Neckring.

Dadurch ist ein vorteilhaftes Handling des Behälters im Bereich der Behältermündung möglich.

Gemäß einem Ausführungsbeispiel ist das Zentrierelement kegelförmig, tulpen oder kegelstumpfförmig ausgebildet. Mittels einer derartigen Formung des Zentrierelements kann beim Einspannen eine Zentrierung des Behälters in der Behälteraufnahme und damit eine optimierte Ausrichtung desselben erreicht werden.

Gemäß einem Ausführungsbeispiel ist das Zentrierelement über einen Stößel bewegbar. Der Stößel kann beispielsweise durch die Kurvensteuerung bewegbar sein. Damit kann das Zentrierelement abhängig von dem Verlauf der Steuerkurve auf- und ab bewegt werden.

Gemäß einem Ausführungsbeispiel weist der Bewegungsmechanismus ein längenveränderliches Spann- oder Federelement auf, das beim Anpressen des Zentrierelements auf die Behältermündung komprimierbar ist. Dieses Spann- oder Federelement kann beispielsweise durch einen Elastomer oder durch eine Druckfeder, beispielsweise eine Spiralfeder gebildet werden. Durch dieses Spann- oder Federelement ist es möglich, dass das Zentrierelement im Übergangsbereich relativ lose oder nur mit geringem Anpressdruck auf die Behältermündung gedrückt wird, wohingegen bei Volleinspannung das Spann- oder Federelement entgegen dessen Elastizität und/oder Federkraft komprimiert wird, so dass der Anpressdruck des Zentrierelements gegenüber der Behältermündung erhöht wird.

Gemäß einem Ausführungsbeispiel ist die Halteeinrichtung zangenartig ausgebildet. Diese weist ein Paar von Haltezangen auf, die den Behälter im Mündungsbereich klemmend halten, und zwar beispielsweise passiv, d.h. klemmend durch elastische Rückstellkräfte der Haltezangen, oder durch aktive Greifer.

Gemäß einem Ausführungsbeispiel ist die Halteeinrichtung zum Fixieren des Behälters in einem Bereich zwischen der Behältermündung und einer Außenkontur des Behälters ausgebildet, wobei das Gegenlager eine Auflage für diese Außenkontur bildet. Damit überschneiden sich die Bewegungsbahn der Halteeinrichtungen und die Bewegungsbahn der Behälteraufnahmen, die die eingespannte Halterung des Behälters vornehmen. Erfindungsgemäß wird auch bei Fehlstellen im Behälterstrom eine sichere Beabstandung des Zentrierelements von der Halteeinrichtung erreicht, so dass trotz dieser Überschneidung der Bewegungsbahnen eine berührungsfreie bzw. kollisionsfreie Bewegung der Halteeinrichtungen in einem Zwischenraum zwischen dem Zentrierelement und dem Gegenlager erreicht wird.

Gemäß einem weiteren Aspekt betrifft die Erfindung ein Verfahren zum Übergeben und Fixieren eines Behälters in einer Behälterbehandlungsmaschine, die zumindest eine erste rotierende Fördereinrichtung mit mehreren umfangsseitig verteilt angeordneten Behälteraufnahmen und eine zweite rotierende Fördereinrichtung mit mehreren umfangsseitig verteilt angeordneten Halteeinrichtungen aufweist. Die Behälteraufnahmen und die Halteeinrichtungen der Fördereinrichtungen wirken in einem Übergabebereich kämmend miteinander zusammen, um eine Übergabe eines Behälters zwischen den Fördereinrichtungen zu bewirken. Der Behälter wird dabei durch die Behälteraufnahme zumindest zeitweise im Mündungsbereich eingespannt zwischen einem Zentrierelement und einem mit dem Zentrierelement zusammenwirkenden Gegenlager und durch die Halteeinrichtung in einem Bereich oberhalb des Gegenlagers gehalten. Im Übergabebereich wird das Zentrierelement relativ zum Gegenlager bewegt, um ein Einspannen des Behälters zu bewirken. Das Zentrierelement vollzieht im Übergabebereich einen ersten Teilhub und wird dabei gegen die Behältermündung zur Anlage gebracht. Nach dem Verlassen des Übergabebereichs vollzieht das Zentrierelement einen zweiten Teilhub, um das Zentrierelement gegenüber der Behältermündung anzupressen. Dabei ist der Anpressdruck nach Verlassen des Übergabebereichs größer als im Übergabebereich.

Bei einer vorteilhaften Ausführungsform sind die Zentrierelemente austauschbar am jeweiligen Stößel und/oder dem jeweiligen Spann- oder Federelement angeordnet. Insbesondere vorteilhaft ist es, wenn die Zentrierelemente werkzeuglos austauschbar befestigt sind.

Unter "Behälterbehandlungsvorrichtung" im Sinne der vorliegenden Erfindung werden jedwede Vorrichtungen verstanden, mittels denen eine Behälterbehandlung vollzogen werden kann, insbesondere solche zur Behälterausstattung mit Ausstattungsmerkmalen, beispielsweise Etikettiervorrichtungen, Behälterbedruckungsvorrichtungen etc.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und schematisch eine Behälterbehandlungsvorrichtung mit mehreren rotierenden Fördereinrichtungen in einer Draufsichtdarstellung;
- Fig. 2: beispielhaft und schematisch eine schematische Darstellung der mehrstufigen Behältereinspannung mittels einer Kurvensteuerung; und
- Fig. 3: beispielhaft und schematisch eine schematische Darstellung der mehrstufigen Bewegung des Zentrierelements mittels einer Kurvensteuerung im Falle einer Leerstelle im Behälterstrom.

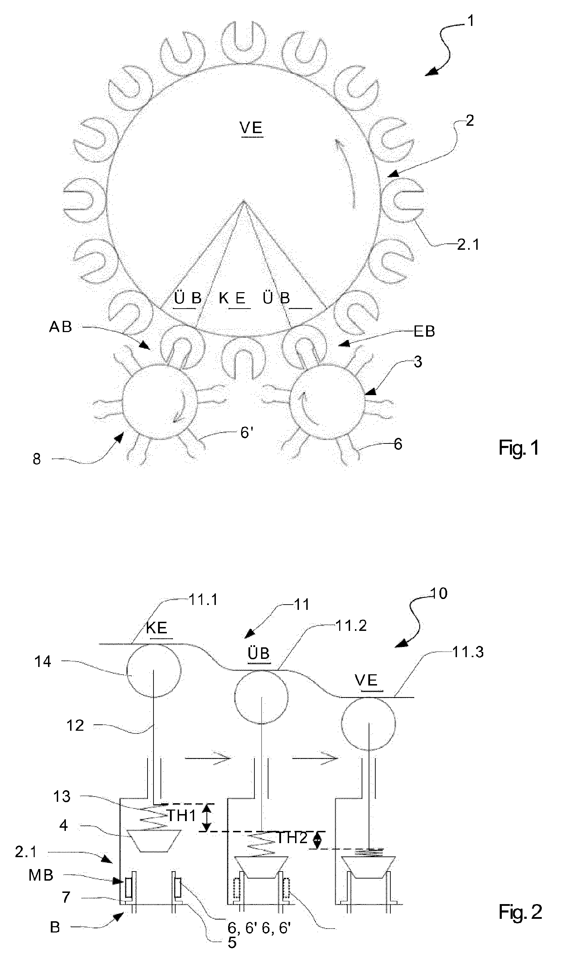

In Figur 1 ist mit dem Bezugszeichen 1 beispielhaft und schematisch eine Behälterbehandlungsvorrichtung 1 in einer Ausschnittdarstellung gezeigt. Die Behälterbehandlungsvorrichtung 1 umfasst eine erste, rotierende Fördereinrichtung 2, die um eine vertikale oder im Wesentlichen vertikal ausgerichtete Maschinenachse umlaufend antreibbar ist. Die Behälterbehandlungsvorrichtung 1 kann beispielsweise ein Etikettierer sein. In diesem Beispiel kann die erste Fördereinrichtung 2 zum Fördern von Behältern zu einer Etikettierstation ausgebildet sein. Es versteht sich, dass die vorliegende Erfindung nicht auf den Anwendungsbereich von Etikettiervorrichtung beschränkt ist sondern allgemein auf dem Fachmann geläufige unterschiedliche Behälterbehandlungsvorrichtungen 1 anwendbar ist.

An der ersten Fördereinrichtung 2 sind entlang des Umfangs verteilt mehrere Behälteraufnahmen 2.1 vorgesehen, die jeweils zur Aufnahme eines einzelnen Behälters B ausgebildet sind. Insbesondere sind die Behälteraufnahmen 2.1, wie nachfolgend näher beschrieben wird, zum Einspannen des Behälters B in dessen Mündungsbereich MB ausgebildet. Die Behälteraufnahmen 2.1 können des Weiteren derart ausgebildet sein, dass die Behälter B hängend gehalten werden, d.h. unterseitig im Bereich des Behälterbodens nicht gestützt werden, sondern abgesehen von der Fixierung im Mündungsbereich MB frei hängen. Dadurch wird erreicht, dass die Behälter B in dem zu etikettierenden Bereich frei zugänglich sind.

Zur Zuführung der Behälter B zu der ersten Fördereinrichtung 2 ist eine zweite Fördereinrichtung 3 vorgesehen, die ebenfalls eine rotierende Fördereinrichtung bildet. Die erste Fördereinrichtung 2 kann beispielsweise durch einen Transportstern und die zweite Fördereinrichtung 3 durch einen Zuführstern 3 gebildet werden. Die zweite Fördereinrichtung 3 weist umfangsseitig verteilt mehrere Halteeinrichtungen 6 auf, mittels denen die Behälter B fixiert und durch Rotation der zweiten Fördereinrichtung 3 der ersten Fördereinrichtung 2 zugeführt werden.

Die Anordnung der ersten und zweiten Fördereinrichtung 2, 3 ist derart getroffen, dass die Behälteraufnahmen 2.1 bzw. die Halteeinrichtungen 6 kämmend ineinandergreifen, um dabei die Behälterübergabe von der zweiten Fördereinrichtung 3 an die erste Fördereinrichtung 2 zu bewirken. In anderen Worten überschneidet sich die Bewegungsbahn der Behälteraufnahmen 2.1 mit der Bewegungsbahn der Halteeinrichtungen 6. Der Teilungsabstand der Behälteraufnahmen 2.1 bzw. der Halteeinrichtungen 6 ist derart gewählt, dass bei der gegenläufigen Rotation der ersten und zweiten Fördereinrichtungen 2, 3 jeweils eine Behälteraufnahme 2.1 und eine Halteeinrichtung 6 zueinander derart ausgerichtet sind, dass eine Übergabe des Behälters B von der zweiten Fördereinrichtung 3 an die erste Fördereinrichtung 2 erfolgt. Diese Behälterübergabe erfolgt in einem Übergabebereich ÜB.

Zur Abführung der Behälter B von der ersten Fördereinrichtung 2 kann eine dritte, rotierende Fördereinrichtung 8 vorgesehen sein, die ebenfalls umfangsseitig verteilt mehrere Halteeinrichtungen 6' aufweist. Die dritte Fördereinrichtung 8 bildet beispielsweise einen Transferstern, mittels dem die behandelten Behälter 8 von der ersten Fördereinrichtung 2 abtransportiert werden. Die Halteeinrichtungen 6' der dritten Fördereinrichtung 8 und die Behälteraufnahmen 2.1 der zweiten Fördereinrichtung 2 greifen ebenfalls kämmend ineinander. In anderen Worten überschneidet sich die Bewegungsbahn der Behälteraufnahmen 2.1 mit der Bewegungsbahn der Halteeinrichtungen 6'. Der Teilungsabstand der Behälteraufnahmen 2.1 bzw. der Halteeinrichtungen 6' ist derart gewählt, dass bei der gegenläufigen Rotation der ersten Fördereinrichtung 2 und der dritten Fördereinrichtung 8 jeweils eine Behälteraufnahme 2.1 und eine Halteeinrichtung 6' zueinander derart ausgerichtet sind, dass eine Übergabe des Behälters B von der ersten Fördereinrichtung 2 an die dritte Fördereinrichtung 8 erfolgt. Diese Behälterübergabe erfolgt in einem weiteren Übergabebereich ÜB.

Die Halteeinrichtungen 6, 6' können insbesondere zangenartig ausgebildet sein. Insbesondere können die Halteeinrichtungen 6, 6' jeweils ein Paar von Haltezangen aufweisen. Diese Haltezangen können beispielsweise als passive Halteeinrichtungen reversibel verformbar ausgebildet sein, um einen Behälter B mit dessen Mündungsbereich MB in einem zwischen einem Paar von Haltezangen ausgebildeten Aufnahmebereich klemmend zu halten. Alternativ hierzu können die Halteeinrichtungen 6, 6' aktiv betätigbare Halteeinrichtungen bzw. Greifer sein, d.h. beispielsweise Haltezangen aufweisen, die durch einen Aktor in einer Offenstellung (Behälter ist freigegeben) und einer Schließstellung (Behälter wird fixiert) positionierbar sind.

Wie in Figur 2 gezeigt, sind an den Behälteraufnahmen 2.1 der ersten Fördereinrichtung 2 Behälterfixiermittel vorgesehen, die eine eingespannte Halterung der Behälter B in dessen Mündungsbereich MB bewirken. Die Behälterfixiermittel weisen ein Zentrierelement 4 und ein mit diesem Zentrierelement 4 zusammenwirkendes Gegenlager 5 auf. Das Zentrierelement 4 ist zum Anpressen gegenüber einer am Behälter B vorgesehenen oberseitigen Behältermündung bzw.

Behälteröffnung ausgebildet. Es kann beispielsweise eine kegelförmige, tulpenförmig oder kegelstumpfförmige Grundform aufweisen, so dass sich das Zentrierelement 4 nach unten hin verjüngt. Dadurch ist es möglich, dass ein Teilabschnitt des Zentrierelements 4 in die Behältermündung eingebracht wird und beim Anpressen des Zentrierelements 4 gegenüber dieser Behältermündung ein Halten und Zentrieren des Behälters B erreicht wird.

Das Zentrierelement 4 kann des Weiteren als Schließelement zum gasdichten Verschließen des Behälters B dienen. Beispielsweise kann die Behälterbehandlungsvorrichtung 1 dazu ausgebildet sein, den Behälter B zumindest teilweise während der Behälterbehandlung mit einem unter Druck stehenden Gas zu beaufschlagen, um den Behälter B in seiner Form zu stabilisieren. Das Zentrierelement 4 kann hierbei beispielsweise eine Gasdurchführung zur Einleitung eines unter Druck stehenden Gases aufweisen.

Das Gegenlager 5 ist zum Zusammenwirken mit einer am Behälter B vorgesehenen Außenkontur 7 ausgebildet. Diese Außenkontur 7 kann insbesondere ein im Mündungsbereich MB des Behälters B vorgesehener Neckring sein. Das Gegenlager 5 ist dazu ausgebildet, den Behälter B hängend an dieser Außenkontur 7 zu halten. Beispielsweise kann das Gegenlager 5 gabelartig ausgebildet sein. Durch eine Relativbewegung des Gegenlagers 5 und des Zentrierelements 4 kann ein einspannen des Behälters B im Mündungsbereich MB erreicht werden. Insbesondere kann das Gegenlager 5 feststehend (d.h. nicht in vertikaler Richtung verschiebbar) und das Zentrierelement 4 relativ zum Gegenlager 5 bewegbar (d.h. in vertikaler Richtung verschiebbar) vorgesehen sein.

Zur Relativbewegung des Zentrierelements 4 gegenüber dem Gegenlager 5 ist ein Bewegungsmechanismus 10 vorgesehen. Dieser Bewegungsmechanismus 10 ist dazu ausgebildet, abhängig von der Drehposition der jeweiligen Behälteraufnahme 2.1 die eingespannte Halterung des Behälters B zu bewirken bzw. diese Einspannung zu lösen. Mehr im Detail ist der Bewegungsmechanismus 10 derart konstruktiv ausgestaltet, dass dieser den Behälter B in mehreren Stufen einspannt bzw. die Einspannung wieder freigibt, wobei sich die Stufen hinsichtlich ihrer Einspannwirkung unterscheiden, d.h. die auf den Behälter B aufgebrachten Einspannkräfte sind in den jeweiligen Stufen unterschiedlich.

Wie in Figur 2 gezeigt, kann das Einspannen des Behälters B in mehreren Teilhüben erfolgen. Die linke Teildarstellung in Figur 2 zeigt die Stellung des Zentrierelements 4, in der ein Einbringen des Behälters B in die Behälteraufnahme 2.1 möglich ist. Dabei ist das Zentrierelement 4 von der Behältermündung abgehoben und der Behälter B wird durch das Gegenlager 5 hängend gehalten. Die den Behälter B zuführende Halteeinrichtung 6 umschließt den Behälter B im Mündungsbereich MB zumindest teilweise. Dieses Umschließen erfolgt vorzugsweise zwischen der Behältermündung und der Außenkontur 7, d.h. oberhalb des Gegenlagers 5. Der Winkelbereich, in dem das Zentrierelement 4 die in der linken Teildarstellung in Fig. 2 gezeigte Stellung einnimmt, ist in Figur 1 mit KE bezeichnet.

Um den Behälter B von der Halteeinrichtung 6 lösen zu können, vollzieht der Bewegungsbahnmechanismus 10 einen ersten Teilhub TH1. Die mittlere Teildarstellung in Figur 2 zeigt die Stellung des Zentrierelements 4 zusammen mit der den ersten Teilhub TH1 bewirkenden Mechanik nach Vollziehen des ersten Teilhubs TH1. Durch den ersten Teilhub TH1 wird eine Teileinspannung des Behälters B in der Behälteraufnahme 2.1 erreicht, und zwar derart, dass das Zentrierelement 4 mit einem ersten Anpressdruck an der Behältermündung angedrückt wird. Diese Teileinspannung des Behälters B wird insbesondere in dem in Figur 1 dargestellten Übergabebereich ÜB vorgenommen, d.h. einem Bereich, in dem die Zuführung des Behälters B durch die zweite Fördereinrichtung 3 an die erste Fördereinrichtung 2 erfolgt, die im Bereich der ersten Fördereinrichtung 2 vorgenommene Behälterbehandlung aber noch nicht begonnen hat.

Der Anpressdruck des Zentrierelements 4 bei dieser Teileinspannung ist derart gewählt, dass die Halteeinrichtung 6 bei dem gegenläufigen Verdrehen der ersten und zweiten Fördereinrichtung 2, 3 vom Behälter B außer Eingriff gebracht werden kann, der Behälter B selbst jedoch in der Behälteraufnahme 2.1 verbleibt. In anderen Worten bewirkt die Teileinspannung ein Vorfixieren des Behälters B zum Zweck des Herauslösens des Behälters B aus der Halteeinrichtung 6. Dieses Herauslösen des Behälters B ist in der mittleren Teildarstellung in Figur 2 durch die strichlierte Darstellung der Halteeinrichtung 6 angedeutet.

Nach dem Herauslösens des Behälters B aus der Halteeinrichtung 6, d.h. nach dem Weiterdrehen der ersten und zweiten Fördereinrichtung 2, 3 derart, dass die Halteeinrichtung 6 und die Behälteraufnahme 2.1 nicht mehr kämmend ineinandergreifenden, vollzieht der Bewegungsmechanismus 10, wie in der rechten Teildarstellung in Figur 2 gezeigt, einen zweiten Teilhub TH2. Dieser zweite Teilhub TH2 ist derart gewählt, dass der Anpressdruck des Zentrierelements 4 gegenüber der Behältermündung im Vergleich zur Teileinspannung erhöht und dadurch eine Volleinspannung erreicht wird. In dieser Volleinspannung wird der Behälter B durch die erste Fördereinrichtung 2 in Richtung der Behälterabgabe bewegt und während dieser Volleinspannung dem zumindest einen Behandlungsschritt unterzogen. Der Winkelbereich, in dem die Volleinspannung vorliegt, ist in Figur 1 mit VE bezeichnet.

Zum Vollziehen der vorgeschriebenen Teilhübe TH1, TH2 ist eine Kurvensteuerung vorgesehen. Die Kurvensteuerung weist eine Steuerkurve 11 auf, die bei Rotation der ersten Fördereinrichtung 2 die vertikale Verstellung der an den Behälteraufnahmen 2.1 vorgesehenen Zentrierelemente 4 vornimmt. An dieser Steuerkurve 11 wird ein Abnehmer 14 entlang bewegt, der mit einem Stößel 12 verbunden ist. Das Stößel 12 wiederum ist über ein Federelement 13, das insbesondere eine Druckfeder ist, mit dem Zentrierelement 4 verbunden. Dieses Federelement 13 wird durch die mehrstufige Steuerkurve 11 unterschiedlich stark komprimiert, und zwar im Übergangsbereich ÜB nicht oder nur geringfügig und bei Volleinspannung (mit VE bezeichneter Sektor) mit einer im Vergleich dazu höheren Federkompression. Dadurch wird das Zentrierelement 4 mit unterschiedlichem Anpressdruck an die Behältermündung angedrückt.

Die Steuerkurve 11 weist zumindest ein erstes Kurvenniveau 11.1, ein zweites Kurvenniveau 11.2 und ein in Bezug auf dessen Höhenlage zwischen dem ersten Kurvenniveau 11.1 und dem zweiten Kursniveau 11.3 liegendes Kurvenzwischenniveau 11.2 auf. Zwischen diesen Niveaus sind Übergangsbereiche vorgesehen, die einen stetigen Übergang zwischen den jeweiligen Niveaus ermöglichen. Das erste Kurvenniveau 11.1 ist in dem in Figur 1 dargestellten Winkelbereich vorgesehen, der mit KE bezeichnet ist und an dem das Zentrierelement 4 in einer oberen Stellung positioniert ist (vgl. linke Teildarstellung in Figur 2). Das zweite Kurvenniveau 11.2 ist in dem in Figur 1 dargestellten Winkelbereich vorgesehen, der mit ÜB bezeichnet ist und an dem durch das Zentrierelement 4 die vorbeschriebene Volleinspannung des Behälters B bewirkt wird. Das Kurvenzwischenniveau 11.2 ist in einem oder mehreren Winkelbereichen vorgesehen, die zwischen den Winkelbereichen KE und VE liegen, d.h. in dem Winkelbereich, in dem die Übergabe des Behälters B an die erste Transporteinrichtung 2 bzw. Entnahme des Behälters B aus einer Behälteraufnahme 2.1 der ersten Transporteinrichtung 2 erfolgt.

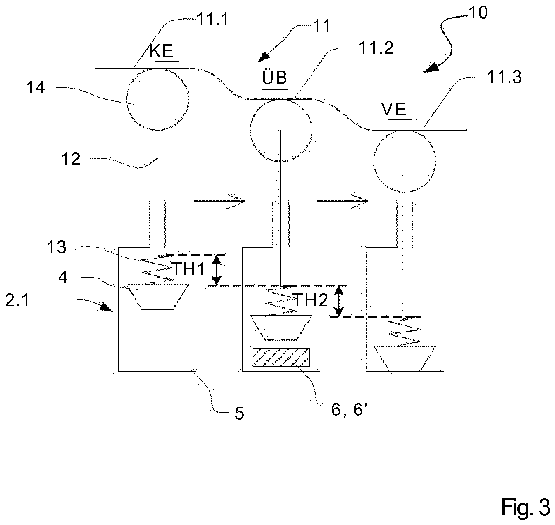

Wie in Figur 3 gezeigt, ist die Höhenlage des Kurvenzwischenniveaus 11.2 derart gewählt, dass für den Fall, dass durch die zweite Fördereinrichtung 3 kein Behälter B an die Behälteraufnahme 2.1 übergeben wird, das Zentrierelement 4 lediglich soweit in Richtung des Gegenlagers 5 bewegt wird, dass das Zentrierelement 4 die Halteeinrichtung 6 nicht berührt. Die Höhenlage des Kurvenzwischenniveaus 11.2 ist weiterhin derart gewählt, dass durch das Zentrierelement 4 ein Anpressdruck an die Behältermündung erzielt wird, um die Halteeinrichtung 6 vom Behälter B lösen zu können.

Um eine leichtere Anpassung der Behälterbehandlungsvorrichtung 1 an unterschiedliche Behälterformate zu erreichen, kann die Steuerkurve 11 insgesamt höhenverstellbar ausgebildet sein. Des Weiteren kann die Steuerkurve 11 auswechselbare Kurvensegmente oder austauschbare Zentrierelemente aufweisen. Beispielsweise kann das das Kurvenzwischenniveau 11.2 bildende Kurvensegment auswechselbar sein, um die relative Höhe des Kurvenzwischenniveaus 11.2 gegenüber dem ersten und zweiten Kursniveau 11.1, 11.3 verändern zu können. Hiermit kann zum einen eine verbesserte Anpassung an verschiedene Behälterformate, zum anderen eine Anpassung der Vorrichtung 1 an verschiedene Höhen der Halteeinrichtungen 6 erreicht werden.

Wie in Figur 1 gezeigt, kann auch im Übergangsbereich zwischen dem Winkelbereich, in dem der Behälter B voll eingespannt ist (Winkelbereich VE) und dem Winkelbereich in dem der Behälter B durch das Zentrierelement 4 nicht eingespannt ist (Winkelbereich KE) eine Teileinspannung des Behälters B vorgenommen werden. Dadurch kann in gleicher Weise erreicht werden, dass für den Fall, dass eine Behälteraufnahme 2.1 der ersten Fördereinrichtung 2 nicht mit einem Behälter B belegt ist, ein Berühren bzw. Kollidieren einer Halteeinrichtung 6' der dritten Fördereinrichtung 8 mit einem Zentrierelement 4 wirksam vermieden wird. Die Erfindung wurde voranstehend an Ausführungsbeispielen beschrieben. Es versteht sich, dass eine Vielzahl von Änderungen oder Abwandlungen möglich sind, ohne dass dadurch der Schutzumfang der beigefügten Ansprüche verlassen wird.

### Bezugszeichenliste

- 1: Behälterbehandlungsvorrichtung
- 2: erste Fördereinrichtung
- 2.1: Behälteraufnahme
- 3: zweite Fördereinrichtung
- 4: Zentrierelement
- 5: Gegenlager
- 6, 6': Halteeinrichtung
- 7: Außenkontur
- 8: dritte Fördereinrichtung

- 10: Bewegungsmechanismus
- 11: Steuerkurve
- 11.1: erstes Kurvenniveau
- 11.2: Kurvenzwischenniveau
- 11.3: zweites Kurvenniveau
- 12: Stößel
- 13: Spann- oder Federelement
- 14: Abnehmer

- AB: Auslaufbereich
- B: Behälter
- EB: Einlaufbereich
- KE: keine Einspannung
- MB: Mündungsbereich
- ÜB: Übergabebereich
- TH1: erster Teilhub
- TH2: zweiter Teilhub
- VE: Volleinspannung

## Patentansprüche

1. Behälterbehandlungsvorrichtung umfassend zumindest eine erste rotierende Fördereinrichtung (2) mit mehreren umfangsseitig verteilt angeordneten Behälteraufnahmen (2.1) und eine zweite rotierende Fördereinrichtung (3) mit mehreren umfangsseitig verteilt angeordneten Halteeinrichtungen (6), wobei die Behälteraufnahmen (2.1) und die Halteeinrichtungen (6) der Fördereinrichtungen (2, 3) in einem Übergabebereich (ÜB) kämmend miteinander zusammenwirken, um eine Übergabe eines Behälters (B) zwischen den Fördereinrichtungen (2, 3) zu bewirken, wobei die Behälteraufnahme (2.1) dazu ausgebildet ist, den Behälter (B) zumindest zeitweise im Mündungsbereich (MB) eingespannt zwischen einem Zentrierelement (4) und einem mit dem Zentrierelement (4) zusammenwirkenden Gegenlager (5) zu fixieren, wobei die Halteeinrichtung (6) dazu ausgebildet ist, den Behälter (B) oberhalb des Bereichs, an dem das Gegenlager (5) angreift, zu fixieren, wobei das Zentrierelement (4) relativ zum Gegenlager (5) bewegbar ist, um ein Einspannen des Behälters (B) zu bewirken, und wobei ein Bewegungsmechanismus (10) für das Zentrierelement (4) vorgesehen ist, **dadurch gekennzeichnet, dass** der Bewegungsmechanismus (10) dazu ausgebildet ist, das Zentrierelement (4) im Übergabebereich (ÜB) durch einen ersten Teilhub (TH1) gegen die Behältermündung in Anlage zu bringen und nach Verlassen des Übergabebereichs (ÜB) durch einen zweiten Teilhub (TH2) das Zentrierelement (4) gegenüber der Behältermündung anzupressen, wobei der Anpressdruck nach Verlassen des Übergabebereichs (ÜB) größer ist als im Übergabebereich (ÜB).

2. Behälterbehandlungsvorrichtung nach Anspruch 1, **dadurch gekennzeichnet, dass** der erste Teilhub (TH1) derart gewählt ist, dass im Falle des Fehlens eines zu übergebenden Behälters (B) das Zentrierelement (4) oberhalb der Halteeinrichtung (6) beabstandet zu dieser angeordnet ist.

3. Behälterbehandlungsvorrichtung nach Anspruch 1 oder 2, **dadurch gekennzeichnet, dass** der Bewegungsmechanismus (10) kurvengesteuert ist.

4. Behälterbehandlungsvorrichtung nach einem der vorhergehenden Ansprüche, **dadurch gekennzeichnet, dass** der Bewegungsmechanismus (10) mit einer mehrstufigen Steuerkurve (11) zusammenwirkt, die zumindest ein erstes Kurvenniveau (11.1), bei dem das Zentrierelement (4) von der Behältermündung beabstandet ist, ein zweites Kurvenniveau (11.3), bei dem das Zentrierelement (4) gegenüber der der Behältermündung angepresst wird und ein Kurvenzwischenniveau (11.2) aufweist, dessen Höhe zwischen dem ersten und zweiten Kurvenniveau (11.1, 11.3) liegt.

5. Behälterbehandlungsvorrichtung nach Anspruch 4, **dadurch gekennzeichnet, dass** das Kurvenzwischenniveau (11.2) derart an der Steuerkurve (11) vorgesehen ist, dass das Zentrierelement (4) durch das Kurvenzwischenniveau (11.2) im Übergabebereich (ÜB) den ersten Teilhub (TH1) vollzieht.

6. Behälterbehandlungsvorrichtung nach einem der Ansprüche 3 bis 5, **dadurch gekennzeichnet, dass** die Steuerkurve (11) abschnittsweise oder vollständig höhenverstellbar ausgebildet ist, oder Abschnitte der Steuerkurve (11) austauschbar sind.

7. Behälterbehandlungsvorrichtung nach einem der vorhergehenden Ansprüche, **dadurch gekennzeichnet, dass** die Zentrierelemente (4) austauschbar am jeweiligen Stößel (12) und/oder dem jeweiligen Spann- oder Federelement (13) angeordnet, und sind insbesondere werkzeuglos austauschbar.

8. Behälterbehandlungsvorrichtung nach einem der vorhergehenden Ansprüche, **dadurch gekennzeichnet, dass** die Steuerkurve (11) an mehreren unterschiedlichen Sektoren das Kurvenzwischenniveau (11.2) aufweist.

9. Behälterbehandlungsvorrichtung nach einem der Ansprüche 4 bis 8, **dadurch gekennzeichnet, dass** das Kurvenzwischenniveau (11.2) einem Einlaufbereich (EB) der Behälter (B) und/oder einem Auslaufbereich (AB) der Behälter (B) zugeordnet ist.

10. Behälterbehandlungsvorrichtung nach einem der vorhergehenden Ansprüche, **dadurch gekennzeichnet, dass** das Gegenlager (5) ein Auflager für eine an einem Behälterhals vorgesehene Außenkontur (7), insbesondere einen Neckring bildet.

11. Behälterbehandlungsvorrichtung nach einem der vorhergehenden Ansprüche, **dadurch gekennzeichnet, dass** das Zentrierelement (4) kegelförmig, tulpenförmig oder kegelstumpfförmig ausgebildet ist.

12. Behälterbehandlungsvorrichtung nach einem der vorhergehenden Ansprüche, **dadurch gekennzeichnet, dass** das Zentrierelement (4) über einen Stößel (12) bewegbar ist.

13. Behälterbehandlungsvorrichtung nach einem der vorhergehenden Ansprüche, **dadurch gekennzeichnet, dass** der Bewegungsmechanismus (10) ein längenveränderliches Spann- oder Federelement (13) aufweist, das beim Aufpressen des Zentrierelements (4) auf die Behältermündung komprimierbar ist.

14. Behälterbehandlungsvorrichtung nach einem der vorhergehenden Ansprüche, **dadurch gekennzeichnet, dass** die Halteeinrichtung (6) zangenartig ausgebildet ist.

15. Behälterbehandlungsvorrichtung nach einem der vorhergehenden Ansprüche, **dadurch gekennzeichnet, dass** die Halteeinrichtung (6) zum Fixieren des Behälters in einem Bereich zwischen der Behältermündung und einer Außenkontur (7) des Behälters (B) ausgebildet ist, wobei das Gegenlager (5) eine Auflage für diese Außenkontur (7) bildet.

16. Verfahren zum Übergeben und Fixieren eines Behälters (B) in einer Behälterbehandlungsmaschine (1), die zumindest eine erste rotierende Fördereinrichtung (2) mit mehreren umfangsseitig verteilt angeordneten Behälteraufnahmen (2.1) und eine zweite rotierende Fördereinrichtung (3) mit mehreren umfangsseitig verteilt angeordneten Halteeinrichtungen (6) aufweist, wobei die Behälteraufnahmen (2.1) und die Halteeinrichtungen (6) der Fördereinrichtungen (2, 3) in einem Übergabebereich (ÜB) kämmend miteinander zusammenwirken, um eine Übergabe eines Behälters (B) zwischen den Fördereinrichtungen (2, 3) zu bewirken, wobei der Behälter (B) durch die Behälteraufnahme (2.1) zumindest zeitweise im Mündungsbereich (MB) eingespannt zwischen einem Zentrierelement (4) und einem mit dem Zentrierelement (4) zusammenwirkenden Gegenlager (5) und durch die Halteeinrichtung (6) in einem Bereich oberhalb des Gegenlagers (5) gehalten wird, wobei im Übergabebereich (ÜB) das Zentrierelement (4) relativ zum Gegenlager (5) bewegt wird, um ein Einspannen des Behälters (B) zu bewirken, **dadurch gekennzeichnet, dass** das Zentrierelement (4) im Übergabebereich (ÜB) einen ersten Teilhub (TH1) vollzieht und dabei gegen die Behältermündung zur Anlage gebracht wird und nach dem Verlassen des Übergabebereichs (ÜB) einen zweiten Teilhub (TH2) vollzieht, um das Zentrierelement (4) gegenüber der Behältermündung anzupressen, wobei der Anpressdruck nach Verlassen des Übergabebereichs (ÜB) größer ist als im Übergabebereich (ÜB).

## Claims

1. Container handling device, comprising at least one first rotating conveying means (2) with a plurality of container receptacles (2.1) distributed around the circumference, and a second rotating conveying means (3) with a plurality of holding means (6) distributed around the circumference, wherein the container receptacles (2.1) and the holding means (6) of the conveying means (2, 3) interact in meshing engagement with one another in a transfer area (ÜB), in order to transfer a container (B) between the conveying means (2, 3), wherein the container receptacles (2.1) are designed such as to fix the container (B) at least temporarily in the mouth area (MB) so as to be clamped between a centring element (4) and a counterbearing (5) interacting with the centring element (4), wherein the holding means (6) are designed such as to fix the container (B) above the area in which the counterbearing (5) is engaging, wherein the centring element (4) can be moved relative to the counterbearing (5), in order to cause the clamping of the container (B), and wherein a movement mechanism (10) is provided for the centring element (4), **characterised in that** the movement mechanism (10) is designed such as to bring the centring element (4) in the transfer area (ÜB) into contact against the container mouth by means of a first partial stroke (TH1), and, after leaving the transfer area (ÜB), to press the centring element (4) against the container mouth by means of a second partial stroke (TH2), wherein the contact pressure after leaving the transfer area (ÜB) is greater than in the transfer area (ÜB).

2. Container handling device according to claim 1, **characterised in that** the first partial stroke (TH1) is selected in such a way that, in the event of a fault in a container (B) which is to be transferred, the centring element (4) is arranged above the holding means (6) and at a distance interval from it.

3. Container handling device according to claim 1 or 2, **characterised in that** the movement mechanism (10) is curve-controlled.

4. Container handling device according to any one of the preceding claims, **characterised in that** the movement mechanism (10) interacts with a multistage control curve (11), which comprises at least one first curve level (11.1), wherein the centring element (4) is arranged at a distance from the container mouth, a second curve level (11.3), wherein the centring element (4) is pressed against the container mouth, and an intermediate curve level (11.2), the height of which lies between the first and second curve levels (11.1, 11.3).

5. Container handling device according to claim 4, **characterised in that** the intermediate curve level (11.2) is provided on the control curve (11) in such a way that the centring element (4) completes the first partial stroke (TH1) through the intermediate curve level (11.2) in the transfer area (ÜB).

6. Container handling device according to any one of claims 3 to 5, **characterised in that** the control curve (11) is designed as height-adjustable in section or entirely, or that sections of the control curve (11) are exchangeable.

7. Container handling device according to any one of the preceding claims, **characterised in that** the centring elements (4) are assigned such as to be exchangeable on the respective plunger (12) and/or on the respective clamping or spring element (13), and, in particular, can be exchanged without the need for tools.

8. Container handling device according to any one of the preceding claims, **characterised in that** the control curve (11) comprises the intermediate control level (11.2) at several different sectors.

9. Container handling device according to any one of claims 4 to 8, **characterised in that** the intermediate curve level (11.2) is assigned to an inlet region (EB) of the containers (B) and/or to an outlet region (AB) of the containers (B).

10. Container handling device according to any one of the preceding claims, **characterised in that** the counterbearing (5) forms a base for an outer contour (7) provided on a container neck, in particular a neck ring.

11. Container handling device according to any one of the preceding claims, **characterised in that** the centring element (4) is configured as spherical, tulip shaped, or in the form of a truncated cone.

12. Container handling device according to any one of the preceding claims, **characterised in that** the centring element (4) can be moved by means of a plunger (12).

13. Container handling device according to any one of the preceding claims, **characterised in that** the movement mechanism (10) comprises a clamping or spring element (13) of changeable length, which can be compressed when the centring element (4) is pressed onto the container mouth.

14. Container handling device according to any one of the preceding claims, **characterised in that** the holding means (6) are configured in the form of pincers.

15. Container handling device according to any one of the preceding claims, **characterised in that** the holding means (6) is configured such as to fix the container in an area between the container mouth and an outer contour (7) of the container (B), wherein the counterbearing (5) forms a base for this outer contour (7).

16. Method for transferring and fixing a container (B) in a container handling machine (1), which comprises at least one first rotating conveying means (2) with a plurality of container receptacles (2.1) distributed around the circumference, and a second rotating conveying means (3) with a plurality of holding means (6) distributed around the circumference, wherein the container receptacles (2.1) and the holding means (6) of the conveying means (2, 3) interact in meshing engagement with one another in a transfer area (ÜB), in order to bring about the transfer of a container (B) between the conveying means (2, 3), wherein the container (B) is clamped by the container receptacle (2.1) at least temporarily in the mouth area (MB) between a centring element (4) and a counterbearing (5) interacting with the centring element (4), and is held by the holding means (6) in an area above the counterbearing (5), wherein, in the transfer area (ÜB), the centring element (4) is moved relative to the counterbearing (5), in order to cause the clamping of the container (B), **characterised in that** the centring element (4) carries out a first partial stroke (TH1) in the transfer area (ÜB), and in this situation is brought to bear in contact against the container mouth, and, after leaving the transfer area (ÜB), carries out a second partial stroke (TH2), in order to press the centring element (4) against the container mouth, wherein the contact pressure after leaving the transfer area (ÜB) is greater than in the transfer area (ÜB).

## Revendications

1. Dispositif de traitement de récipient comprenant au moins un premier dispositif de transport (2) rotatif avec plusieurs logements de récipient (2.1) agencés de manière répartie côté périphérie et un second dispositif de transport (3) rotatif avec plusieurs dispositifs de retenue (6) agencés de manière répartie côté périphérie, dans lequel les logements de récipient (2.1) et les dispositifs de retenue (6) des dispositifs de transport (2, 3) coagissent entre eux en s'engrenant dans une zone de transfert (ÜB) afin de provoquer un transfert d'un récipient (B) entre les dispositifs de transport (2, 3), dans lequel le logement de récipient (2.1) est réalisé afin de fixer le récipient (B) serré au moins temporairement dans la zone d'embouchure (MB) entre un élément de centrage (4) et un contre-palier (5) coagissant avec l'élément de centrage (4), dans lequel le dispositif de retenue (6) est réalisé afin de fixer le récipient (B) au-dessus de la zone, contre laquelle agit le contre-palier (5), dans lequel l'élément de centrage (4) est mobile par rapport au contre-palier (5) afin de provoquer un serrage du récipient (B), et dans lequel un mécanisme de déplacement (10) est prévu pour l'élément de centrage (4), **caractérisé en ce que** le mécanisme de déplacement (10) est réalisé afin d'amener en appui l'élément de centrage (4) dans la zone de transfert (ÜB) par une première course partielle (TH1) contre l'embouchure de récipient et de presser après la sortie de la zone de transfert (ÜB) par une seconde course partielle (TH2) l'élément de centrage (4) par rapport à l'embouchure de récipient, dans lequel la pression de contact après la sortie de la zone de transfert (ÜB) est supérieure à celle dans la zone de transfert (ÜB).

2. Dispositif de traitement de récipient selon la revendication 1, **caractérisé en ce que** la première course partielle (TH1) est choisie de telle manière qu'en cas de défaut d'un récipient (B) à transférer, l'élément de centrage (4) soit agencé au-dessus du dispositif de retenue (6) à distance de celui-ci.

3. Dispositif de traitement de récipient selon la revendication 1 ou 2, **caractérisé en ce que** le mécanisme de déplacement (10) est commandé par came.

4. Dispositif de traitement de récipient selon l'une quelconque des revendications précédentes, **caractérisé en ce que** le mécanisme de déplacement (10) coagit avec une came de commande (11) à plusieurs étages qui présente au moins un premier niveau de came (11.1), pour lequel l'élément de centrage (4) est espacé de l'embouchure de récipient, un second niveau de came (11.3), pour lequel l'élément de centrage (4) est pressé par rapport à à l'embouchure de récipient et présente un niveau intermédiaire de came (11.2), dont la hauteur se situe entre le premier et le second niveau de came (11.1, 11.3).

5. Dispositif de traitement de récipient selon la revendication 4, **caractérisé en ce que** le niveau intermédiaire de came (11.2) est prévu au niveau de la came de commande (11) de telle manière que l'élément de centrage (4) exécute la première course partielle (TH1) par le niveau intermédiaire de came (11.2) dans la zone de transfert (ÜB).

6. Dispositif de traitement de récipient selon l'une quelconque des revendications 3 à 5, **caractérisé en ce que** la came de commande (11) est réalisée de manière réglable en hauteur par section ou complètement, ou des sections de la came de commande (11) sont interchangeables.

7. Dispositif de traitement de récipient selon l'une quelconque des revendications précédentes, **caractérisé en ce que** les éléments de centrage (4) sont agencés de manière interchangeable au niveau du coulisseau (12) respectif et/ou de l'élément de serrage ou de ressort (13) respectif, et sont interchangeables en particulier sans outil.

8. Dispositif de traitement de récipient selon l'une quelconque des revendications précédentes, **caractérisé en ce que** la came de commande (11) présente le niveau intermédiaire de came (11.2) au niveau de plusieurs secteurs différents.

9. Dispositif de traitement de récipient selon l'une quelconque des revendications 4 à 8, **caractérisé en ce que** le niveau intermédiaire de came (11.2) est associé à une zone d'entrée (EB) des récipients (B) et/ou à une zone de sortie (AB) des récipients (B).

10. Dispositif de traitement de récipient selon l'une quelconque des revendications précédentes, **caractérisé en ce que** le contre-palier (5) forme un appui pour un contour extérieur (7) prévu au niveau d'un goulot de récipient, en particulier une bague de col.

11. Dispositif de traitement de récipient selon l'une quelconque des revendications précédentes, **caractérisé en ce que** l'élément de centrage (4) est réalisé en forme de cône, de tulipe ou de cône tronqué.

12. Dispositif de traitement de récipient selon l'une quelconque des revendications précédentes, **caractérisé en ce que** l'élément de centrage (4) est mobile par le biais d'un coulisseau (12).

13. Dispositif de traitement de récipient selon l'une quelconque des revendications précédentes, **caractérisé en ce que** le mécanisme de déplacement (10) présente un élément de serrage ou de ressort (13) modifiable en longueur qui est comprimable lors du pressage de l'élément de centrage (4) sur l'embouchure de récipient.

14. Dispositif de traitement de récipient selon l'une quelconque des revendications précédentes, **caractérisé en ce que** le dispositif de retenue (6) est réalisé en forme de pince.

15. Dispositif de traitement de récipient selon l'une quelconque des revendications précédentes, **caractérisé en ce que** le dispositif de retenue (6) est réalisé pour la fixation du récipient dans une zone entre l'embouchure de récipient et un contour extérieur (7) du récipient (B), dans lequel le contre-palier (5) forme un appui pour ce contour extérieur (7).

16. Procédé de transfert et de fixation d'un récipient (B) dans une machine de traitement de récipient (1) qui présente au moins un premier dispositif de transport (2) rotatif avec plusieurs logements de récipient (2.1) agencés de manière répartie côté périphérie et un second dispositif de transport (3) rotatif avec plusieurs dispositifs de retenue (6) agencés de manière répartie côté périphérie, dans lequel les logements de récipient (2.1) et les dispositifs de retenue (6) des dispositifs de transport (2, 3) coagissent entre eux en s'engrenant dans une zone de transfert (ÜB) afin de provoquer un transfert d'un récipient (B) entre les dispositifs de transport (2, 3), dans lequel le récipient (B) est maintenu par le logement de récipient (2.1) au moins temporairement dans la zone d'embouchure (MB) serré entre un élément de centrage (4) et un contre-palier (5) coagissant avec l'élément de centrage (4) et est maintenu par le dispositif de retenue (6) dans une zone au-dessus du contre-palier (5), dans lequel l'élément de centrage (4) est mobile par rapport au contre-palier (5) dans la zone de transfert (ÜB) afin de provoquer un serrage du récipient (B), **caractérisé en ce que** l'élément de centrage (4) exécute une première course partielle (TH1) dans la zone de transfert (ÜB) et est amené en appui contre l'embouchure de récipient et exécute une seconde course partielle (TH2) après la sortie de la zone de transfert (ÜB) afin de presser l'élément de centrage (4) par rapport à l'embouchure de récipient, dans lequel la pression de contact après la sortie de la zone de transfert (ÜB) est supérieure à celle dans la zone de transfert (ÜB).
